# EUROPEAN PATENT SPECIFICATION

(11) **EP 2 314 647 B1**
(45) Date of publication and mention of the grant of the patent: **29.01.2014**
(21) Application number: 09806664.0
(22) Date of filing: 05.08.2009
(51) Int. Cl.: C09D 7/14, B01F 1/00, B01F 7/16, C09D 201/00, H01G 13/00, H01M 4/04

(54) **METHOD AND DEVICE FOR PRODUCING A COATING MATERIAL**
VERFAHREN UND VORRICHTUNG ZUR HERSTELLUNG EINES BESCHICHTUNGSMATERIALS
PROCÉDÉ ET DISPOSITIF PERMETTANT LA PRODUCTION D'UN MATÉRIAU DE REVÊTEMENT

(30) Priority: 11.08.2008 JP 2008206851
(43) Date of publication of application: 27.04.2011
(73) Proprietor: Primix Corporation, Osaka 553-0001 (JP)
(72) Inventor: FURUICHI Hisashi, Osaka-shi Osaka 553-0001 (JP); OHATA Tsumoru, Osaka-shi Osaka 553-0001 (JP)
(74) Representative: Boult Wade Tennant
(86) International application number: PCT/JP2009/063853
(87) International publication number: WO 2010/018771

(56) References cited:
- EP-A1- 1 057 876
- EP-A1- 1 152 041
- EP-A1- 1 754 757
- EP-A1- 1 978 063
- WO-A1-01/70890
- JP-A- 8 057 205
- JP-A- 9 265 833
- JP-A- 10 015 374
- JP-A- 11 347 388
- JP-A- 2000 208 046
- JP-A- 2004 199 916
- JP-A- 2007 125 454

## Description

### TECHNICAL FIELD

The present invention relates to a method and an apparatus for producing coating materials, including an electrode material for a battery.

### BACKGROUND ART

The demand for batteries such as lithium-ion secondary batteries is expected to increase further in the future, for use as a power source of portable electronic devices or electric cars, and storage of electric power generated by wind or solar power generation facility, for example. As for these batteries, reduction in size and weight as well as enhanced safety is demanded. For instance, in using lithium-ion batteries as the power source of an electric car, a plurality of batteries are used as connected in series. If even one of these batteries has an electrode defect, the risk of firing increases. On the other hand, to provide a smaller battery with a larger capacity, the electrode film needs to be made thinner.

To realize the thickness reduction of a battery while securing safety, it is necessary to apply an electrode coating material onto an electrode base material thinly and uniformly over the entire surface of the electrode base material, which, however, is extremely difficult. If the electrode coating material applied onto the electrode base material is not uniform or includes aggregates scattered over the material, a defect in the electrode occurs, causing significant deterioration of safety.

Generally, in a conventional method of producing an electrode coating material of a secondary battery, ingredients are put into a container by a batch process and stirred for dispersion by rotating a stirring blade, as proposed in e.g. Patent Document 1.

However, since the above-described electrode coating material production method employs a batch process for stirring the material, perfectly uniform stirring is not assured. Thus, non-dispersed matter (aggregated matter) may be generated from the material adhering to the container or the material remaining unstirred adjacent to the shaft of the stirring blade. Moreover, when the stirring step is repeated without cleaning the container, the amount of the material built up particularly on the shaft driving portion of the stirring blade in an upper portion of the container or the inner surface of the container increases, and this may mix, as aggregated matter, into the coating material. Further, since the dispersion is not satisfactory, aggregation often occurs in the once dispersed material.

Conventionally, therefore, such non-dispersed matter or aggregates in the coating material obtained by completing the above-described stirring step is usually removed with a filter. However, aggregates smaller than a certain particle size cannot be reliably removed even with a filter. In a coating step in which the coating material prepared in this way is supplied to a die nozzle and applied onto a base electrode material, the aggregates may be jammed between the die nozzle and the base electrode material, causing an application failure such as the formation of a linear coating pattern or dispersion of the aggregates over the coating surface.

To enhance the performance of a secondary battery, the particle size of the electrode material needs to be reduced. However, in the conventional method in which the filtering step for removing the aggregates from the coating material is essential, the removal of aggregates or the like using a filter with a smaller mesh takes long time, resulting in considerable deterioration of production efficiency.

Thus, the conventional method for producing an electrode coating material is not satisfactory, in terms of efficiently producing an electrode coating material capable of achieving reduction in the electrode film thickness while maintaining high safety.

EP 1 978 063 provides a method for preparing an aqueous dispersion to be used in the manufacture of a hydrophobic coating. The method comprises mixing an aqueous dispersion of a polymeric binder with a mixture of inorganic particles and at least one fatty acid or a salt thereof.

EP 1 754 757 provides a method for preparing a particulate dry tinter for use in tinting a coating composition. The process comprises mixing at least two colour pigments and a dispersant in the presence of a liquid carrier to form a homogenous tinter dispersion mixture and drying the tinter dispersion to form particles. In use, the powder tinter is stirred into a base paint either according to a recipe or by eye to produce the desired shade of colour.

EP 1 152 041 provides a method for the preparation of an aqueous coating composition. The method comprises mixing a first composition with a second composition by stirring. The first composition includes a water-dilutable binder, a special effect pigment, and water. The second composition is a rheology additive which includes a water-dilutable polyurethane resin, an inorganic layered silicate, and water.

WO 01/70890 provides a process for preparing a short filamentous coating and a multi-colour patterned coating material for decorating a building. The process includes blending a high hydrated composition, a colouring binder, and a polyacrylic emulsion by a conventional mixing method in an open vessel and gradually adding an aqueous solution of metal complex salt.

EP 1 057 876 provides a method of producing a two-pack fast-setting waterborne paint composition. The composition is produced by mixing a reducing component and an oxidixing component, either by hand, or with the use of an electric paddle-type mixer, or with the use of a two-component mixing spray system.

### PRIOR ART

### PATENT DOCUMENT

Patent Document 1: JP-A-2004-199916

### DISCLOSURE OF THE INVENTION

### PROBLEM TO BE SOLVED BY THE INVENTION

The present invention has been proposed under the circumstances described above. It is therefore an object of the present invention to provide a method and an apparatus which are capable of eliminating or simplifying the step of removing aggregates or the like and efficiently producing a coating material that can be applied thinly and uniformly onto a target surface.

### MEANS FOR SOLVING THE PROBLEM

To solve the above-described problem, the present invention takes the following technical means.

According to a first aspect of the present invention, there is provided a method for producing a coating material of mixed ingredients including a powder and a solvent. The method comprises: a preliminary stirring step of preliminarily stirring the ingredients to obtain an intermediate slurry material; a high-speed stirring step of continuously stirring the intermediate slurry material in a high-speed stirrer including a container and a rotational member rotating at a high speed slightly inward of an inner wall surface of the container, wherein the intermediate slurry material is caused to exist in the form of a film between the rotational member and the inner wall surface by a centrifugal force of the rotational member to obtain a stirred slurry material; and a vacuum defoaming step of vacuum-defoaming the stirred slurry material in a treatment tank provided with a stirring blade to obtain a defoamed slurry material, wherein the preliminary stirring step comprises loading the ingredients into a preliminary stirring tank provided with a stirring blade for performing stirring, introducing the intermediate slurry material into a storage tank provided with a stirring blade, and continuously supplying the intermediate slurry material from the storage tank to the high-speed stirrer for the high-speed stirring step.

Preferably, the stirred slurry material discharged from the high-speed stirrer is once introduced into a buffer tank and then transferred from the buffer tank to the treatment tank for the vacuum defoaming step.

Preferably, the vacuum defoaming step is performed using a plurality of treatment tanks each having a temperature adjustment function, and the stirred slurry material from the buffer tank is successively supplied selectively to the treatment tanks.

Preferably, the defoamed slurry material is successively transferred selectively from the treatment tanks to a coating step.

According to a second aspect of the present invention, there is provided an apparatus for producing a coating material of mixed ingredients including a powder and a solvent. The apparatus comprises : a preliminary stirring tank for loading the ingredients and preliminary stirring the ingredients to obtain an intermediate slurry material; a high-speed stirrer for receiving the intermediate slurry material, the high-speed stirrer including a container and a rotational member rotating at a high speed slightly inward of an inner wall surface of the container, to continuously stir the intermediate slurry material such that it is caused to exist in the form of a film between the rotational member and the inner wall surface by a centrifugal force of the rotational member to obtain a stirred slurry material; a treatment tank for receiving the stirred slurry material provided by the high-speed stirrer and vacuum-defoaming the stirred slurry material while stirring with a stirring blade to obtain a defoamed slurry material, and a transferer for transferring the defoamed slurry material to a coating step as a coating material, the apparatus further comprising a storage tank provided with a stirring blade for receiving the intermediate slurry material and continuously supplying the intermediate slurry material to the high-speed stirrer.

Preferably, the apparatus further comprises a buffer tank for receiving the stirred slurry material discharged from the high-speed stirrer and transferring the stirred slurry material to the treatment tank.

Preferably, a pipe for supplying the stirred slurry material, discharged from the high-speed stirrer, to the buffer tank is surrounded by a path for a cooling medium.

Preferably, the treatment tank comprises a plurality of treatment tanks each surrounded by a path for a temperature adjusting medium, into which the stirred slurry material is successively supplied selectively.

Preferably, the transferer successively transfers the defoamed slurry material selectively from the treatment tanks to the coating step.

Preferably, the rotational member of the high-speed stirrer is in the form of a cylinder arranged with a small gap between itself and the inner wall surface of the container and includes a plurality of holes penetrating in an inward-outward direction.

Preferably, the rotational member or the inner wall surface of the container is partially or entirely made of a wear resistant material.

Preferably, the coating material is an electrode material for a lithium-ion secondary battery or capacitor.

Other features and advantages of the present invention will become more apparent from the detailed description given below with reference to the accompanying drawings.

### BRIEF DESCRIPTION OF THE DRAWINGS

Fig. 1 is an overall structural view of a coating material production apparatus according to the present invention;
Fig. 2 is a sectional view showing an example of high-speed stirrer of the apparatus shown in Fig. 1; and
Fig. 3 illustrates coating of an object using a die nozzle.

### BEST MODE FOR CARRYING OUT THE INVENTION

Preferred embodiments of the present invention are described below with reference to the accompanying drawings.

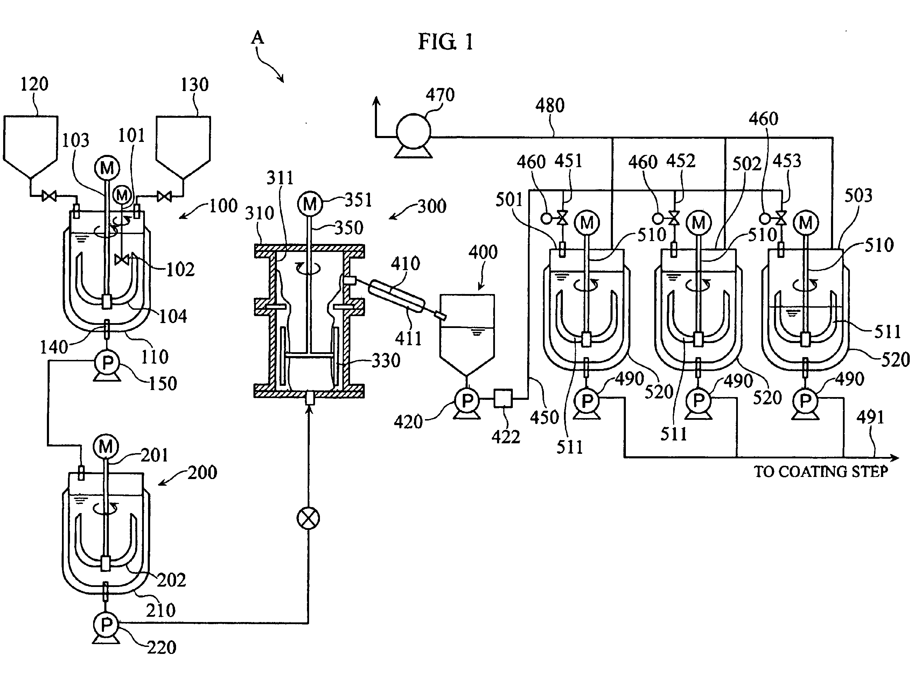

Fig. 1 shows an overall structure of an apparatus A for producing a coating material according to an embodiment of the present invention. The production apparatus A includes a preliminary stirring tank 100, a storage tank 200, a high-speed stirrer 300, a buffer tank 400, and a plurality of treatment tanks 501, 502 and 503.

The preliminary stirring tank 100 is provided to mix ingredients to some degree, prior to substantial stirring in the high-speed stirrer 300. In this embodiment, the preliminary stirring tank includes a smaller-diameter stirring blade 102 that rotates at a higher speed about a vertical rotation shaft 101 and a larger-diameter stirring blade 104 that rotates at a lower speed about a vertical rotation shaft 103. Ingredients from ingredient hoppers 120 and 130 are collected in the preliminary stirring tank and preliminarily stirred by rotating the two stirring blades 102 and 104. The high-speed rotation of the smaller-diameter stirring blade 102 mixes the ingredients, while the rotation of the larger-diameter stirring blade 104 stirs the entire material to provide a uniformly mixed state. In this embodiment, the preliminary stirring tank 100 is surrounded by a jacket 110 through which a temperature adjusting medium can flow, so that the temperature during the preliminary stirring is appropriately adjustable.

Examples of the ingredients to be fed into the preliminary stirring tank 100 include a powder as an active material appropriate for forming an electrode material for a lithium-ion secondary battery, a solvent and a binder. Examples of a positive-electrode active material include a powder of lithium cobalt oxide, lithium nickel oxide, lithium manganese oxide, lithium iron phosphate, and combination or modification of these. Examples of a negative-electrode active material include a powder of natural graphite, synthetic graphite, silicon-based compounds or alloy materials.

The stirring in the preliminary stirring tank 100 is performed by a batch process. When each time of stirring is finished, the intermediate material in the form of slurry obtained by the stirring is transferred from a discharge port 140 at the bottom of the preliminary stirring tank 100 to the storage tank 200 via a pump 150.

The storage tank 200 includes a stirring blade 202 having a large diameter and constantly rotating at a low speed about a vertical rotation shaft 201, so that the intermediate slurry material is stirred slowly in the storage tank. In this embodiment, the storage tank 200 is also surrounded by a jacket 210 through which a temperature adjusting medium can flow, so that the temperature of the intermediate material is appropriately adjustable. The intermediate material discharged from the bottom of the storage tank 200 is continuously transferred to the high-speed stirrer 300 via a pump 220. That is, the storage tank 200 enables the intermediate material to be continuously transferred to the high-speed stirrer 300, in spite of the fact that stirring in the preliminary stirring tank 100 is performed by a batch process. Since the storage tank 200 is provided with the stirring blade 202 as noted above, intermediate material (slurry) in the same condition can be transferred to the high-speed stirrer 300, although the powder in the intermediate material is not yet highly dispersed and aggregation can occur.

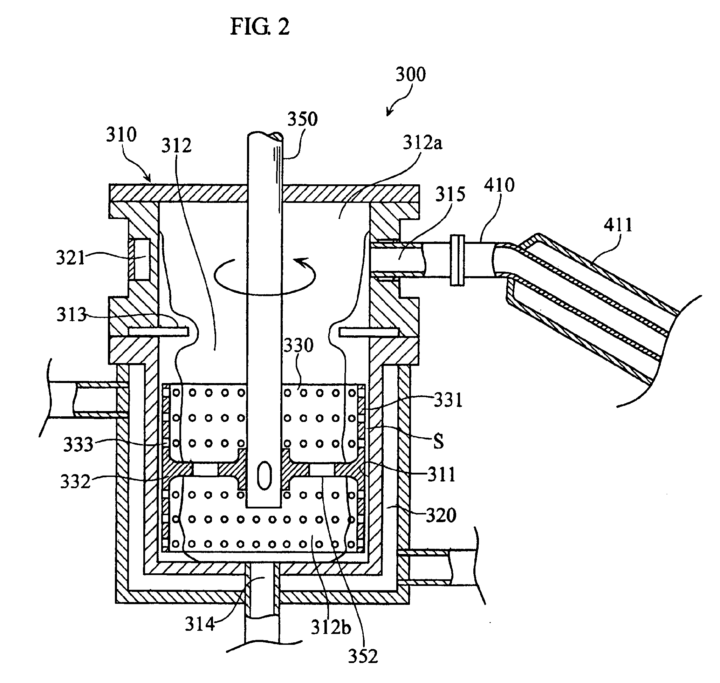

As specifically shown in Fig. 2, the high-speed stirrer 300 includes a container 310, and a rotational member 330 that rotates at a high speed about a rotation shaft 350 extending vertically at the center of the container 310.

The container 310 has a generally cylindrical inner wall surface 311, defining a cylindrical space 312 having a predetermined length in the vertical direction. The rotation shaft 350 is rotated at a high speed by a high torque motor 351 mounted above the container 310. The cylindrical space 312 is divided into an upper space 312a and a lower space 312b by an inward flange 313. A material supply port 314 connected to the lower space 312b is provided at the bottom of the container 310. The intermediate material in the form of slurry transferred from the storage tank 200 is supplied from the material supply port 314. A discharge port 315 connected to the upper space 312a is provided at an upper portion of the container 310, through which the slurry material after being stirred is discharged to the outside. A jacket 320 through which cooling water can circulate is provided around the lower space 312b of the container 310, whereas a cooling water circulation path 321 is provided around the upper space 312a.

The rotational member 330 comprises a cylindrical member 332 having an outer circumferential surface 331 facing the inner wall surface 311 via a small gap S of about 1 to 3 mm in the lower space 312b and is supported on the rotation shaft 350 via a support member 352. The cylindrical member 332 is formed with a plurality of holes 333 penetrating in the inward-outward direction.

It is desirable that at least the cylindrical member 332 of the rotational member 330 is made of a material with a high resistance to wear, such as fine ceramic material, or the outer circumferential surface 331 of the cylindrical member 332 is coated with a material with a high resistance to wear, such as fine ceramic material. Also, it is desirable that, of the inner wall surface 311 of the container 310, at least the region facing the rotational member 330 via the gap S is coated with a material with a high resistance to wear, such as fine ceramic material. Examples of such fine ceramic material include alumina ceramic material.

The rotational member 330 is rotated at a high speed in such a manner that the peripheral speed of the rotational member 330 (speed relative to the inner wall surface 311) is 10 to 50 m/s. As will be described later, a motor with a high torque and a high output is necessary for rotating the rotational member 330 at such a peripheral speed while performing stirring, and the dimensions of the container 310 and the rotational member 330 are selected in accordance with a usable motor. At a given peripheral speed of the rotational member 330, the processing ability of the high-speed stirrer 300 is substantially proportional to the area of the outer circumferential surface 331 of the rotational member 330. Thus, the processing ability can be enhanced by increasing the radius of the container 310 and rotational member 330.

When supplied to the high-speed stirrer 300, the intermediate material in the formof slurry receives a centrifugal force by the rotational member 330 rotating at a high speed and is hence pressed against the inner wall surface 311 of the container 310. The intermediate material is continuously introduced to spread in the gap S between the outer circumferential surface 331 of the cylindrical member 332 of the rotational member 330 and the inner wall surface 311 of the container 310. Since the cylindrical member 332 of this embodiment is formed with a plurality of holes 333, the intermediate material coming into contact with the inner surface of the cylindrical member 332 is also smoothly guided into the gap S. As noted before, the cylindrical member 332 has a high peripheral speed of e.g. 10 to 50 m/s. When the peripheral speed is 20 m/s, the intermediate material existing between the outer circumferential surface 331 of the cylindrical member 332 and the inner wall surface 311 of the container 310 is subjected to a sharp velocity gradient of 0 to 20 m/s within a small thickness of 1 to 3 mm. Thus, the intermediate slurry material continues to receive a strong shearing force, and the strong energy provides considerably high level of powder dispersion. Conceivably, this is because a phenomenon similar to a sudden turbulence transition occurs continuously due to the action of the very strong shearing energy, in spite of the fact that the intermediate material in the form of slurry has a relatively high viscosity.

The intermediate material is continuously fed into the high-speed stirrer 300 and constantly receives a centrifugal force due to the high-speed rotation of the rotational member 330. Thus, the stirred material climbs on the inner wall surface 311 of the container 310 beyond the inward flange 313 and is eventually discharged continuously from the discharge port 315 of the upper space 312a.

During the operation of the high-speed stirrer 300, the intermediate material, subjected to stirring due to the strong shearing energy between the rotational member 330 and the inner wall surface 311, heats up due to the heat generated by friction. However, the intermediate material is properly cooled by the cooling water flowing through the cooling water circulation jacket 320 and the cooling water circulation path 321, so that boiling or the like of the intermediate material is prevented.

As noted before, the outer circumferential surface 331 of the rotational member 330 and the inner wall surface 311 of the container 310 may be coated with a material with a high resistance to wear, such as fine ceramic material. With this arrangement, minute foreign matter such as wear metal particles, generated by the intermediate material's reception of a strong shearing force between these surfaces, is effectivelyprevented frommixing into the intermediate slurry material.

The slurry material stirred by the high-speed stirrer 300 is introduced into the buffer tank 400 via a conduit 410 due to the action of gravity. In this embodiment, the conduit 410 is also provided with a cooling water circulation path 411 in the form of a double tube, which, in combination with the cooling effect by the cooling water circulation jacket 320 and the cooling water circulation path 321 of the high-speed stirrer 300, properly cools the material after the stirring.

The slurry material after passing through the buffer tank 400 is supplied successively, via a pump 420, to each of the three vacuum-defoaming treatment tanks 501, 502 and 503 arranged in a row. The feed pipe 450 from the pump 420 to each of the treatment tanks 501, 502 and 503 is provided with a filter 422 for removing foreign matter accidentally mixed in the material. The feed pipe 450 includes branch pipes 451, 452 and 453 for treatment tanks 501, 502, and 503, respectively, which are provided with valves 460 controlled by a controller, not shown, to be opened or closed. A pipe 480 for applying vacuum generated by e.g. a vacuum pump 470 is also connected to each of the treatment tanks 501, 502 and 503.

Each of the treatment tanks 501, 502 and 503 is provided with a stirring blade 511 that rotates at a low speed about a vertical rotation shaft 510, so that to the slurry material introduced in the tank can be stirred slowly. Each of the treatment tanks 501, 502 and 503 is surrounded by a jacket 520 through which a temperature adjusting medium circulates. Each of the treatment tanks 501, 502 and 503 may have the same structure as that of the storage tank 200 except that vacuum application is made possible with respect to the treatment tanks.

With a predetermined amount of slurry material supplied, each of the treatment tanks 501, 502 and 503 rotates the stirring blade 511 while applying vacuum, thereby performing vacuum defoaming of the material by a batch process. After the vacuum defoaming is completed, the defoamed slurry material is supplied from the treatment tanks 501, 502 and 503 to a coating step via a pump 490 and a conduit 491. The defoaming step is performed successively, by supplying slurry material from the buffer tank 400 to the treatment tanks 501, 502 and 503 emptied by discharging all the defoamed slurry material to the coating step. In this way, although the vacuum defoaming step in each of the treatment tanks 501, 502 and 503 is performed by a batch process, material from the buffer tank 400 can be continuously supplied, and the defoamed slurry material can be continuously supplied to the coating step. The provision of the jacket 520 for the circulation of a temperature adjusting medium around each of the treatment tanks 501, 502 and 503 allows adjustment of the viscosity of the defoamed slurry material and promotes defoaming. The successive supply of slurry material to each of the treatment tanks 501, 502 and 503 and the continuous supply of defoamed slurry material from each of the treatment tanks 501, 502 and 503 to the coating step can be controlled by controlling the opening/closing of the valves 460 provided at the material-feeding branch pipes 451, 452, 453 and the on/off state of the pump 490 provided at each of the treatment tanks 501, 502 and 503.

In the coating material production apparatus A described above, a material including at least a powder and a solvent is first preliminarily stirred and then supplied to the high-speed stirrer 300 for substantial stirring. The above-described special effect by the high-speed stirrer 300 provides a slurry material in which powder is highly dispersed in the solvent. As noted before, when the apparatus is used for producing an electrode coating material for lithium-ion secondary batteries, it is desirable that the powder to be supplied as the active material has a particle size not larger than e.g. 20 µm. According to the coating material production apparatus A described above, owing to the stirring by the high-speed stirrer 300, the active material powder in the coating material does not aggregate even after the lapse of a long period of time from the treatment, and breaking of the powder particles into smaller particles is even observed.

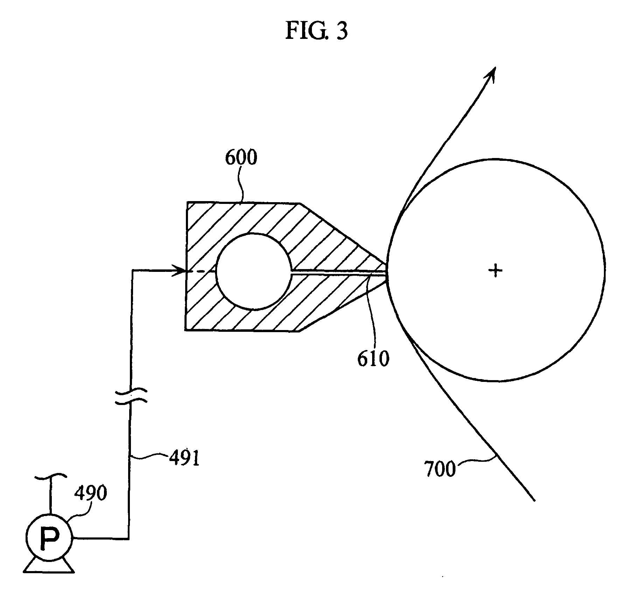

Moreover, in the coating material production apparatus A described above, since vacuum defoaming is performed with respect to the slurry material after stirred by the high-speed stirrer 300, the coating material produced does not contain aggregates of the active material nor does it contain bubbles. Therefore, in the case where the produced coating material is applied to the electrode base material 700 via a die nozzle 600 (Fig. 3), the coating material is smoothly fed even when the opening 610 of the die nozzle 600 is made considerably narrow. This allows formation of an extremely thin electrode material layer on the electrode base material 700. Moreover, a defect in the electrode material layer due to aggregates or bubbles hardly occurs. In this way, the present invention makes a large contribution to size reduction and safety enhancement in the field of battery production such as lithium-ion battery production.

The coating material production apparatus A described above achieves high efficiency in coating material production, because the high-speed stirrer 300 continuously performs high dispersion of powder in the solvent, and further, the plurality of treatment tanks 501, 502 and 503 allow continuous supply of the defoamed slurry material.

The scope of the invention is not limited to the foregoing embodiment. Any variations in the scope of matter set forth in each of the claims are to be included in the scope of the present invention.

Although the foregoing embodiment is to produce an electrode coating material for a lithium-ion secondary battery, the present invention is applicable to the production of an electrode coating material for other kinds of batteries or capacitors, and to any coating material obtained by mixing a powder and a solvent.

## Claims

1. A method for producing a coating material of mixed ingredients including a powder and a solvent, the method comprising:
a preliminary stirring step of preliminarily stirring the ingredients to obtain an intermediate slurry material;
a high-speed stirring step of continuously stirring the intermediate slurry material in a high-speed stirrer including a container and a rotational member rotating at a high speed slightly inward of an inner wall surface of the container, wherein the intermediate slurry material is caused to exist in a form of a film between the rotational member and the inner wall surface by a centrifugal force of the rotational member to obtain a stirred slurry material; and
a vacuum defoaming step of vacuum-defoaming the stirred slurry material in a treatment tank provided with a stirring blade to obtain a defoamed slurry material,
wherein the preliminary stirring step comprises loading the ingredients into a preliminary stirring tank provided with a stirring blade for performing stirring, introducing the intermediate slurry material into a storage tank provided with a stirring blade, and continuously supplying the intermediate slurry material from the storage tank to the high-speed stirrer for the high-speed stirring step.

2. The method for producing a coating material according to claim 1, wherein the stirred slurry material discharged from the high-speed stirrer is once introduced into a buffer tank and then transferred from the buffer tank to the treatment tank for the vacuum defoaming step.

3. The method for producing a coating material according to claim 2, wherein the vacuumdefoaming step is performed using a plurality of treatment tanks each having a temperature adjustment function, and the stirred slurry material from the buffer tank is successively supplied selectively to the treatment tanks.

4. The method for producing a coating material according to claim 3, wherein the defoamed slurry material is successively transferred selectively from the treatment tanks to a coating step.

5. The method for producing a coating material according to any one of claims 1-4, wherein the coating material is an electrode material for a lithium-ion secondary battery or capacitor.

6. An apparatus for producing a coating material of mixed ingredients including a powder and a solvent, the apparatus comprising:
a preliminary stirring tank for loading the ingredients and preliminary stirring the ingredients to obtain an intermediate slurry material;
a high-speed stirrer for receiving the intermediate slurry material, the high-speed stirrer including a container and a rotational member rotating at a high speed slightly inward of an inner wall surface of the container, to continuously stir the intermediate slurry material such that it is caused to exist in a form of a film between the rotational member and the inner wall surface by a centrifugal force of the rotational member to obtain a stirred slurry material;
a treatment tank for receiving the stirred slurry material provided by the high-speed stirrer and vacuum-defoaming the stirred material while stirring with a stirring blade to obtain a defoamed slurry material, and
a transferer for transferring the defoamed slurry material to a coating step as a coating material,
the apparatus further comprising a storage tank provided with a stirring blade for receiving the intermediate slurry material and continuously supplying the intermediate slurry material to the high-speed stirrer.

7. The apparatus for producing a coating material according to claim 6, further comprising a buffer tank for receiving the stirred slurry material discharged from the high-speed stirrer and transferring the stirred slurry material to the treatment tank.

8. The apparatus for producing a coating material according to claim 7, wherein a pipe for supplying the stirred slurry material, discharged from the high-speed stirrer, to the buffer tank is surrounded by a path for a cooling medium.

9. The apparatus for producing a coating material according to any one of claims 6-8, wherein the treatment tank comprises a plurality of treatment tanks each surrounded by a path for a temperature adjusting medium, into which the stirred slurry material is successively supplied selectively.

10. The apparatus for producing a coating material according to claim 9, wherein the transferer successively transfers the defoamed slurry material from the treatment tanks to the coating step.

11. The apparatus for producing a coating material according to any one of claims 6-10, wherein the rotational member of the high-speed stirrer is in a form of a cylinder arranged with a small gap between itself and the inner wall surface of the container and includes a plurality of holes penetrating in an inward-outward direction.

12. The apparatus for producing a coating material according to claim 11, wherein the rotational member or the inner wall surface of the container is partially or entirely made of a wear resistant material.

13. The apparatus for producing a coating material according to any one of claims 6-12, wherein the coatingmaterial is an electrode material for a lithium-ion secondary battery or capacitor.

## Patentansprüche

1. Verfahren zum Herstellen eines Beschichtungsmaterials aus vermischten Bestandteilen, einschließlich eines Pulvers und eines Lösungsmittels, wobei das Verfahren Folgendes umfasst:
einen vorbereitenden Rührschritt des vorbereitenden Rührens der Bestandteile, um ein Aufschlämmungszwischenmaterial zu erhalten;
einen Hochgeschwindigkeitsrührschritt des kontinuierlichen Rührens des Aufschlämmungszwischenmaterials in einem Hochgeschwindigkeitsrührer, der einen Behälter und ein rotierendes Element umfasst, das mit hoher Drehzahl leicht nach innen von einer Innenwandfläche des Behälters rotiert, wobei bewirkt wird, dass das Aufschlämmungszwischenmaterial in Form eines Films zwischen dem rotierenden Element und der Innenwandfläche durch eine Zentrifugalkraft des rotierenden Elementes besteht, um ein aufgerührtes Aufschlämmungsmaterial zu erhalten; und
einen Vakuumentschäumungsschritt des Vakuumentschäumens des aufgerührten Aufschlämmungsmaterials in einem Behandlungstank, der mit einem Rührflügel versehen ist, um ein entschäumtes Aufschlämmungsmaterial zu erhalten,
wobei der vorbereitende Rührschritt das Laden der Bestandteile in einen vorbereitenden Rührtank, welcher mit einem Rührflügel zum Ausführen des Rührens versehen ist, Einleiten des Aufschlämmungszwischenmaterials in einen Vorratstank, der mit einem Rührflügel versehen ist, und kontinuierliches Zuführen des Aufschlämmungszwischenmaterials aus dem Vorratstank zum Hochgeschwindigkeitsrührer für den Hochgeschwindigkeitsrührschritt umfasst.

2. Verfahren zum Herstellen eines Beschichtungsmaterials nach Anspruch 1, wobei das aufgerührte Aufschlämmungsmaterial aus dem Hochgeschwindigkeitsrührer einmal in einen Puffertank eingeleitet und dann vom Puffertank zum Behandlungstank für den Vakuumentschäumungsschritt übertragen wird.

3. Verfahren zum Herstellen eines Beschichtungsmaterials nach Anspruch 2, wobei der Vakuumentschäumungsschritt unter Verwendung einer Vielzahl Behandlungstanks ausgeführt wird, wobei jeder eine Temperaturregelfunktion hat, und das aufgerührte Aufschlämmungsmaterial aus dem Puffertank den Behandlungstanks sukzessive selektiv zugeführt wird.

4. Verfahren zum Herstellen eines Beschichtungsmaterials nach Anspruch 3, wobei das entschäumte Aufschlämmungsmaterial sukzessive selektiv von den Behandlungstanks zu einem Beschichtungsschritt übertragen wird.

5. Verfahren zum Herstellen eines Beschichtungsmaterials nach einem der Ansprüche 1-4, wobei das Beschichtungsmaterial ein Elektrodenmaterial für einen Lithiumionen-Akkumulator oder Kondensator ist.

6. Vorrichtung zum Herstellen eines Beschichtungsmaterials aus vermischten Bestandteilen, einschließlich eines Pulvers und eines Lösungsmittels, wobei die Vorrichtung Folgendes umfasst:
einen vorbereitenden Rührtank zum Laden der Bestandteile und vorbereitendes Aufrühren der Bestandteile, um ein Aufschlämmungszwischenmaterial zu erhalten;
einen Hochgeschwindigkeitsrührer zum Aufnehmen des Aufschlämmungszwischenmaterials, wobei der Hochgeschwindigkeitsrührer einen Behälter und ein rotierendes Element umfasst, das mit hoher Drehzahl leicht nach innen von einer Innenwandfläche des Behälters rotiert, wobei bewirkt wird, dass das Aufschlämmungszwischenmaterial in Form eines Films zwischen dem rotierenden Element und der Innenwandfläche durch eine Zentrifugalkraft des rotierenden Elementes besteht, um ein aufgerührtes Aufschlämmungsmaterial zu erhalten;
einen Behandlungstank zum Aufnehmen des aufgerührten Aufschlämmungsmaterials, das durch den Hochgeschwindigkeitsrührer bereitgestellt wird, und Vakuumentschäumen des aufgerührten Materials, während mit einem Rührflügel gerührt wird, um ein entschäumtes Aufschlämmungsmaterial zu erhalten, und
eine Übertragungsvorrichtung zum Übertragen des entschäumten Aufschlämmungsmaterials zu einem Beschichtungsschritt als Beschichtungsmaterial, wobei die Vorrichtung ferner einen Vorratstank umfasst, der mit einem Rührflügel versehen ist zum Aufnehmen des Aufschlämmungszwischenmaterials und zum kontinuierlichen Zuführen des Aufschlämmungszwischenmaterials zum Hochgeschwindigkeitsrührer.

7. Vorrichtung zum Herstellen eines Beschichtungsmaterials nach Anspruch 6, die ferner einen Puffertank zum Aufnehmen des aufgerührten Aufschlämmungsmaterials umfasst, welches aus dem Hochgeschwindigkeitsrührer abgelassen ist, und Übertragen des aufgerührten Aufschlämmungsmaterials zum Behandlungstank.

8. Vorrichtung zum Herstellen eines Beschichtungsmaterials nach Anspruch 7, wobei ein Rohr zum Zuführen des aufgerührten Aufschlämmungsmaterials, welches aus dem Hochgeschwindigkeitsrührer abgelassen ist, zum Puffertank von einem Strömungsweg für ein Kühlmittel umgeben ist.

9. Vorrichtung zum Herstellen eines Beschichtungsmaterials nach einem der Ansprüche 6-8, wobei der Behandlungstank eine Vielzahl von Behandlungstanks umfasst, die jeweils von einem Strömungsweg für ein Temperaturregelungsmedium umgeben sind, denen das aufgerührte Aufschlämmungsmaterial sukzessive selektiv zugeführt wird.

10. Vorrichtung zum Herstellen eines Beschichtungsmaterials nach Anspruch 9, wobei die Übertragungsvorrichtung sukzessive das entschäumte Aufschlämmungsmaterial von den Behandlungstanks zum Beschichtungsschritt überträgt.

11. Vorrichtung zum Herstellen eines Beschichtungsmaterials nach einem der Ansprüche 6-10, wobei das rotierende Element des Hochgeschwindigkeitsrührers in Form eines Zylinders vorliegt, der mit einem kleinen Spalt zwischen sich und der Innenwandfläche des Behälters angeordnet ist und mehrere Löcher umfasst, die diese in eine Richtung von innen nach außen durchdringen.

12. Vorrichtung zum Herstellen eines Beschichtungsmaterials nach Anspruch 11, wobei das rotierende Element oder die Innenwandfläche des Behälters teilweise oder vollständig aus einem verschleißfesten Material hergestellt ist.

13. Vorrichtung zum Herstellen eines Beschichtungsmaterials nach einem der Ansprüche 6-12, wobei das Beschichtungsmaterial ein Elektrodenmaterial für einen Lithiumionen-Akkumulator oder Kondensator ist.

## Revendications

1. Procédé de production d'un matériau de revêtement à base d'ingrédients mélangés comportant une poudre et un solvant, le procédé comprenant :
une étape de mélange préliminaire consistant à mélanger préalablement les ingrédients afin d'obtenir un matériau pâteux intermédiaire ;
une étape de mélange à grande vitesse consistant à mélanger en continu le matériau pâteux intermédiaire dans un mélangeur à grande vitesse comportant un conteneur et un élément rotatif tournant à grande vitesse légèrement à l'intérieur d'une surface de paroi interne du conteneur, dans lequel le matériau pâteux intermédiaire est amené à se présenter sous une forme de film entre l'élément rotatif et la surface de paroi interne sous l'effet de la force centrifuge de l'élément rotatif afin d'obtenir un matériau pâteux mélangé ; et
une étape de désémulsification sous vide consistant à éliminer la mousse sous vide du matériau pâteux mélangé dans un réservoir de traitement comportant une lame de mélange, de manière à obtenir un matériau pâteux désémulsifié,
dans lequel l'étape de mélange préliminaire comprend le chargement des ingrédients dans un réservoir de mélange préliminaire comportant la lame de mélange destinée à réaliser le mélange, l'introduction du matériau pâteux intermédiaire dans un réservoir de stockage comportant une lame de mélange, et l'alimentation en continu du matériau pâteux intermédiaire à partir du réservoir de stockage vers le mélangeur à grande vitesse de manière à assurer l'étape de mélange à grande vitesse.

2. Procédé de production d'un matériau de revêtement selon la revendication 1, dans lequel le matériau pâteux mélangé, déchargé à partir du mélangeur à grande vitesse est en premier introduit dans un réservoir tampon et ensuite transféré à partir du réservoir tampon vers le réservoir de traitement en vue de l'étape de désémulsification sous vide.

3. Procédé de production d'un matériau de revêtement selon la revendication 2, dans lequel l'étape de désémulsification sous vide est mise en oeuvre en utilisant une pluralité de réservoirs de traitement présentant chacun une fonction de réglage de température, et le matériau pâteux mélangé provenant du réservoir tampon est délivré successivement de manière sélective aux réservoirs de traitement.

4. Procédé de production d'un matériau de revêtement selon la revendication 3, dans lequel le matériau pâteux désémulsifié est transféré successivement de manière sélective à partir des réservoirs de traitement à une étape de revêtement.

5. Procédé de production d'un matériau de revêtement selon l'une quelconque des revendications 1 à 4, dans lequel le matériau de revêtement est un matériau d'électrode pour une batterie secondaire lithium ion ou un condensateur.

6. Dispositif de production d'un matériau de revêtement à base d'ingrédients mélangés comprenant une poudre et un solvant, le dispositif comprenant :
un réservoir de mélange préliminaire destiné à charger les ingrédients et à réaliser un mélange préliminaire des ingrédients de manière à obtenir un matériau pâteux intermédiaire ;
un mélangeur à grande vitesse destiné à recevoir le matériau pâteux intermédiaire, le mélangeur à grande vitesse comportant un conteneur et un élément rotatif tournant à grande vitesse légèrement vers l'intérieur d'une surface de paroi interne du conteneur, afin de mélanger en continu le matériau pâteux intermédiaire de telle sorte qu'il est amené à se présenter sous une forme de film entre l'élément rotatif et la surface de paroi interne sous l'effet d'une force centrifuge de l'élément rotatif, de manière à obtenir le matériau pâteux mélangé ;
un réservoir de traitement destiné à recevoir le matériau pâteux mélangé, délivré par le mélangeur à grande vitesse et à désémulsifier sous vide le matériau mélangé tout en assurant le mélange avec une lame de mélange de manière à obtenir un matériau pâteux désémulsifié, et
un dispositif de transfert destiné à transférer le matériau pâteux désémulsifié en vue d'une étape de revêtement en tant que matériau de revêtement,
le dispositif comprenant en outre un réservoir de stockage comportant une lame de mélange destinée à recevoir le matériau pâteux intermédiaire et à délivrer en continu le matériau pâteux intermédiaire au mélangeur à grande vitesse.

7. Dispositif de production d'un matériau de revêtement selon la revendication 6, comprenant en outre un réservoir tampon destiné à recevoir le matériau pâteux mélangé déchargé à partir du mélangeur à grande vitesse et à transférer le matériau pâteux mélangé au réservoir de traitement.

8. Dispositif de production d'un matériau de revêtement selon la revendication 7, dans lequel une tuyauterie destinée à délivrer le matériau pâteux mélangé, déchargé à partir du mélangeur à grande vitesse, au réservoir tampon, est entourée par un circuit pour fluide de refroidissement.

9. Dispositif de production d'un matériau de revêtement selon l'une quelconque des revendications 6 à 8, dans lequel le réservoir de traitement comprend une pluralité de réservoirs de traitement entourés chacun par un circuit pour un fluide de réglage de température, dans lequel le matériau pâteux mélangé est délivré successivement de manière sélective.

10. Dispositif de production d'un matériau de revêtement selon la revendication 9, dans lequel le dispositif de transfert assure successivement le transfert du matériau pâteux désémulsifié à partir des réservoirs de traitement en vue de l'étape de revêtement.

11. Dispositif de production d'un matériau de revêtement selon l'une quelconque des revendications 6 à 10, dans lequel l'élément rotatif du mélangeur à grande vitesse est sous la forme d'un cylindre agencé avec un faible jeu entre lui-même et la surface de paroi interne du conteneur et comporte une pluralité d'orifices pénétrants suivant une direction depuis l'intérieur vers l'extérieur.

12. Dispositif de production d'un matériau de revêtement selon la revendication 11, dans lequel l'élément rotatif ou la surface de paroi interne du conteneur est partiellement ou entièrement réalisé en un matériau résistant à l'usure.

13. Dispositif de production d'un matériau de revêtement selon l'une quelconque des revendications 6 à 12, dans lequel le matériau de revêtement est un matériau d'électrode pour une batterie secondaire lithium ion ou un condensateur.
